# EUROPÄISCHE PATENTSCHRIFT

(11) **EP 4 515 126 B1**
(45) Veröffentlichungstag und Bekanntmachung des Hinweises auf die Patenterteilung: **02.07.2025**
(21) Anmeldenummer: 23744096.1
(22) Anmeldetag: 14.07.2023
(51) Int. Cl.: F16J 15/3208, F16J 15/3212, F16J 15/322, F16J 15/324, F16J 15/3244, F16J 15/3276

(54) **RADIALWELLENDICHTRING, RADIALWELLENDICHTUNG UND RADIALWELLENDICHTUNGSANORDNUNG**
RADIAL SHAFT SEALING RING, RADIAL SHAFT SEAL AND RADIAL SHAFT SEAL ARRANGEMENT
BAGUE D'ÉTANCHÉITÉ D'ARBRE RADIALE, JOINT D'ÉTANCHÉITÉ D'ARBRE RADIAL ET AGENCEMENT DE JOINT D'ÉTANCHÉITÉ D'ARBRE RADIAL

(30) Priorität: 18.07.2022 DE 102022117919
(43) Veröffentlichungstag der Anmeldung: 05.03.2025
(73) Patentinhaber: Trelleborg Sealing Solutions Germany GmbH, 70565 Stuttgart (DE)
(72) Erfinder: SCHIEFER, Felix, 70567 Stuttgart (DE); SCHÜLE, Christoph, 71032 Böblingen (DE)
(74) Vertreter: Kohler Schmid Möbus Patentanwälte
(86) Internationale Anmeldenummer: PCT/EP2023/069606
(87) Internationale Veröffentlichungsnummer: WO 2024/017779

(56) Entgegenhaltungen:
- JP-A- 2013 113 320
- US-A- 2 434 484
- US-A- 4 350 347
- US-A- 5 928 676

## Beschreibung

Die Erfindung betrifft einen Radialwellendichtring gemäß dem Oberbegriff von Anspruch 1, eine Radialwellendichtung sowie eine Radialwellendichtungsanordnung. Ein derartiger Radialwellendichtring ist beispielsweise aus der US 4 350 347 A bekannt geworden.

Radialwellendichtringe (RWDR) sind einbaufertige Dichtelemente mit radial angeordneter Dichtlippe zur Abdichtung von Wellen und Achsen. Die Radialwellendichtringe bestehen nach einer Bauart aus einen Halteabschnitt, der zumeist mit einem metallischen Versteifungsring versehen ist, einer Dichtlippe, die sich in Richtung der Zentralachse des Radialwellendichtrings von dem Halteabschnitt wegerstreckt und einem Vorspannelement in Form eines gummielastischen Vorspannrings oder einer Schraubenzugfeder bzw. einer Schraubendruckfeder. Das Vorspannelement ist in der Regel auf der von der Dichtkante der Dichtlippe wegweisenden Rückseite der Dichtlippe in einer Haltenut der Dichtlippe gehalten angeordnet.

Derlei Radialwellendichtringe können zusätzliche Funktionselemente, beispielsweise eine Schmutz- oder Abstreiferlippe oder auch einen Stützvorsprung zum Schutz der Dichtkante vor einer Überbelastung, aufweisen. Auch können derlei Radialwellendichtrings in einer Montagekartusche bereitgestellt sein, in der ggf. weitere Dicht- oder Funktonbauelemente gehalten angeordnet sein können.

Für die Standzeit des Radialwellendichtrings ist eine ausreichende Schmierung der an der Dichtfläche anliegenden dynamischen Dichtkante wesentlich. Aus diesem Grund kann die Dichtlippe an ihrer Dichtseite sogenannte Tribostrukturen aufweisen, durch die die Schmierung der Dichtkante beeinflusst bzw. verbessert wird. Diese unterliegen jedoch im Betriebseinsatz einem hohen Verschleiß.

Aus der eingangs genannten US 4 350 347 A ist ein Radialwellendichtring bekannt, der eine zur Rückseite hin bzw. radial nach außen offene Haltenut zur Aufnahme bzw. zum Einlegen der Ringfeder aufweist. Ein Radialwellendichtring mit einer radial nach außen offenen Haltenut und mit einer zur Druckentlastung in die Haltenut mündenden Durchgangsbohrung ist aus der JP 2013 113320 A bekannt. Aus der US 2 434 484 A ist weiter ein Radialwellendichtring mit einer Dichtlippe bekannt nach dem Oberbegriff von Anspruch 1. In eine axial einseitig offene Aussparung des Dichtrings ist ein Halteeinsatz eingesetzt, der wiederum zur Aufnahme einer Ringfeder dient.

Ferner ist aus US 5 928 676 A eine Radialwellendichtung mit einem Radialwellendichtring und einer darin unlösbar eingebetteten Ringfeder bekannt. Der Radialwellendichtring weist L-förmigen Taschen auf, die in Umfangsrichtung durch Stege voneinander getrennt sind. Herstellungsbedingt sind ein radialer Taschenabschnitt und ein axialer Taschenabschnitt zur Ringfeder hin offen bzw. tangieren die Ringfeder.

Es ist deshalb die Aufgabe der Erfindung, einen Radialwellendichtring, eine Radialwellendichtung sowie eine Radialwellendichtungsanordnung anzugeben, die eine verbesserte Schmierung in dem durch den Radialwellendichtring abzudichtenden Dichtspalt ermöglichen.

Die den Radialwellendichtring betreffende Aufgabe wird durch einen Radialwellendichtring gemäß Anspruch 1 gelöst. Die erfindungsgemäße Radialwellendichtung ist in Anspruch 11 und die Radialwellendichtungsanordnung ist in Anspruch 13 angegeben.

Der erfindungsgemäße Radialwellendichtring dient einem Abdichten eines Dichtspalts zwischen einer Welle und einem die Welle umgreifenden Maschinenteil. Der Radialwellendichtring umfasst einen Halteabschnitt und eine Dichtlippe, die sich vom Halteabschnitt in einer zur Zentralachse des Radialwellendichtrings axialen Richtung bis zu ihrem freien Rand wegerstreckt.

Die Dichtlippe umfasst eine Dichtseite, die eine Dichtkante zur dynamisch dichtenden Anlage an der Dichtfläche der Welle oder des Maschinenteils aufweist, sowie eine von der Dichtkante in radialer Richtung wegweisende Rückseite, die mit einer Haltenut zur Aufnahme eines elastisch verformbaren Vorspannelements versehen ist. Mittels des Halteelements ist die Dichtkante im Betriebseinsatz des Radialwellendichtrings in einer radialen Richtung gegen die Dichtfläche der Welle oder des Maschinenteils dynamisch dichtend vorspannbar.

Die Dichtlippe weist erfindungsgemäß am Nutgrund der Haltenut radiale Vertiefungen auf, die in Umfangsrichtung des Radialwellendichtrings voneinander beabstandet angeordnet sind, wobei jede Vertiefung eine radiale Tiefe aufweist, die 10 bis 40% der Nenndicke der Dichtlippe, gemessen zwischen Dichtkante und Nutgrund der Haltenut, beträgt. Mit anderen Worten ist der Nutgrund in Umfangsrichtung höhenstrukturiert. Alternativ oder zusätzlich weist die Dichtlippe mehrere Randaussparungen auf, die sich jeweils in einer radialen Richtung von der Haltenut bis zur Dichtseite erstrecken. Jede Randaussparung grenzt dabei an die Dichtkante an bzw. ist von der Dichtkante beabstandet angeordnet, um das Dichtvermögen des Radialwellendichtrings nicht zu kompromittieren. Die Randaussparungen sind in Umfangsrichtung des Radialwellendichtrings jeweils voneinander beabstandet angeordnet.

Bei beiden Ausführungsformen der Erfindung kann die durch das Vorspannelement und ggf. eine Eigenelastizität des Radialwellendichtrings bedingte Kontaktpressung der Dichtkante in Umfangsrichtung variabel eingestellt werden. Im Einbauzustand des Radialwellendichtrings ist bei einer vorhandenen sogenannten Überdeckung zwischen Dichtring und Dichtfläche, d. h. einer durch den Einbau bedingten elastischen Verformung der Dichtlippe in einer radialen Richtung, bereits durch die Randaussparungen auf der Ölseite der Dichtlippe ein über den Umfang vorteilhaft unsteter Kontaktpressungsverlauf zwischen der Dichtkante und Dichtfläche gewährleistet. In diesem Fall ist eine zusätzliche Federnutmodifikation durch die nutgrundseitigen Vertiefungen nicht zwingend erforderlich. Diese können gleichwohl genutzt werden, um den Kontaktpressungsverlauf weiter zu modifizieren.

Besteht hingegen keine durch die elastische Verformung der Dichtlippe bei Einbau bedingte Überdeckung zwischen dem Dichtring und der mit dem Dichtring abzudichtenden Welle, so sind die nutgrundseitigen Vertiefungen besonders effektiv, um einen veränderten Kontaktpressungsverlauf zwischen der Dichtkante und der zugeordneten Dichtfläche zu bewirken. Durch den über den Umfang variablen, d. h. unsteten, Kontaktpressungsverlauf kann der Dichtkantenverschleiß im Betriebseinsatz des Radialwellendichtrings reduziert, die Dichtkante effektiv geschmiert bzw. gekühlt und in der Folge einer unerwünschten Ölkohlebildung wirksam entgegengewirkt werden. Insgesamt kann dadurch die Standzeit des Radialwellendichtrings verbessert werden.

Bei einem nicht zu vermeidenden Verschleiß der Dichtkante während des Betriebseinsatzes zeigt sich, dass die Verschleißbreite der Dichtkante im Bereich der Vertiefungen/Randaussparungen weniger stark ausgeprägt ist, als in den Bereichen ohne derlei Vertiefungen/Randaussparungen. Mithin zeigt sich hier ein degressives Verschleißverhalten.

Im Bereich der Vertiefungen wird die Kontaktpressung zwischen dem Vorspannelement und der Haltenut des Radialwellendichtrings reduziert und somit die wirkende Reibkraft verringert. Dies ist vorteilhaft bei Betriebsbedingungen, welche zu einer häufigen resultierenden Bewegung des Vorspannelements führen, wie sie beispielsweise bei einer starken dynamischen Exzentrizität der Welle auftritt. Eine alternative Maßnahme ist z. B. eine reibungsreduzierende Beschichtung der Haltenut.

Ganz besonders bevorzugt durchbrechen die Aussparungen den Nutgrund der Haltenut. Weist die Haltenut eine gerundete, insbesondere eine kreisrunde, Querschnittsform auf, so ist als Nutboden derjenige Nutabschnitt zu verstehen, über den mittels eines in der Haltenut angeordneten Vorspannelements üblicherweise eine bezüglich der Zentralachse des Radialwellendichtrings radial gerichtete Kraft auf die Dichtlippe ausübbar ist. Diese Weiterbildung ermöglicht im Betriebseinsatz des Radialwellendichtrings eine besonders große Variabilität des Kontaktpressungsverlaufs zwischen der Dichtkante und der der Dichtkante jeweilig zugeordneten Dichtfläche. Dadurch kann das Einsatzspektrum des Radialwellendichtrings insbesondere auf Hochgeschwindigkeitsanwendungen, wie etwa bei Elektromotoren im Bereich der Elektromobilität, bei Pumpen oder auch bei (Elektro-)Werkzeugen, ausgeweitet werden.

Weist die Dichtlippe des Radialwellendichtrings sowohl die vorgenannten Vertiefungen als auch Randaussparungen auf, so kann mindestens eine Randaussparung zu einer Vertiefung in axialer Richtung fluchtend angeordnet sein. Insbesondere können einige oder auch alle Randaussparungen zu Vertiefungen in axialer Richtung fluchtend angeordnet sein. Im Betriebseinsatz des Radialwellendichtrings kann dadurch in diesen Bereichen im Vergleich zu den Umfangsabschnitten der Dichtlippe ohne derlei Vertiefungen/Aussparungen eine deutlich kleinere Kontaktpressung der Dichtkante und der zugeordneten Dichtfläche der Welle bzw. des Maschinenteils realisiert werden. Dies ist für die Schmierung des dynamischen Kontaktbereichs der Dichtlippe und der Dichtfläche mit einem im Betriebseinsatz jeweilig eingesetzten Schmiermittel besonders vorteilhaft.

Nach einem weiteren Ausführungsbeispiel ist mindestens eine Randaussparung zu einer Vertiefung in Umfangsrichtung versetzt angeordnet. Insbesondere können einige Randaussparungen und einige Vertiefungen oder auch alle Randaussparungen und alle Vertiefungen in Umfangsrichtung relativ zueinander versetzt angeordnet sein. Dabei können die Aussparungen und die Vertiefungen in axialer Richtung relativ zueinander "auf Lücke" angeordnet sein. Im Betriebseinsatz des Radialwellendichtrings kann dadurch eine nochmals differenziertere bzw. feinstufigere Einstellung des Kontaktpressungsverlaufs der Dichtkante und der Dichtfläche realisiert werden. Neben der in Umfangsrichtung einfach alternierenden Abfolge "Randaussparung, Vertiefung, Randaussparung, Vertiefung, etc." sind auch andere alternierende Abfolgen von Randaussparungen und Vertiefungen möglich, wie z.B. "Randaussparung, Randaussparung, Vertiefung, Randaussparung, Randaussparung, etc.". Selbstverständlich sind auch weitere nicht alternierende Abfolgen oder Anordnungen aus alternierenden und nicht alternierenden Abfolgen von Randaussparungen und/oder Vertiefungen möglich.

In einer Kombination dieser beiden Ausführungsbeispiele sind einige der Vertiefungen mit einigen Aussparungen axial fluchtend angeordnet und zwischen dieser fluchtenden Anordnung zusätzliche Vertiefungen angeordnet, also die fluchtende Vertiefung-Aussparung-Anordnung und die zusätzlichen Vertiefungen in Umfangsrichtung relativ zueinander versetzt angeordnet, insbesondere in axialer Richtung relativ zu der fluchtenden Vertiefung-Aussparung-Anordnung auf Lücke angeordnet. Hierdurch kann nochmals eine besonders auf die Betriebsbedingungen angepasste detaillierte Beeinflussung des Kontaktpressungsverlaufs erreicht werden.

Die Randaussparungen der Dichtlippe können nach einer Weiterbildung der Erfindung jeweils eine, bevorzugt zumindest 2-fach oder sogar 4-fach, größere Umfangserstreckung aufweisen als die zwischen den Randaussparungen jeweils angeordneten freien Ränder der Dichtlippe. Dadurch wechseln sich in Umfangsrichtung der Dichtlippe erste längere Dichtkantensegmente, die an einer zu den Randaussparungen korrespondierenden Umfangsposition des Radialwellendichtrings angeordnet sind und demzufolge im Betriebseinsatz mit einer kleineren Kontaktflächenpressung an der Dichtfläche anliegen, mit zweiten kürzeren Dichtflächensegmenten mit einer jeweils größeren Kontaktpressung ab.

Nach einer Ausführungsform der Erfindung weist die Dichtlippe an ihrer Dichtseite hochdruckseitig der Dichtkante einen Absatz auf. Durch einen solchen Absatz kann die Dichtlippe im dichtkantennahen Bereich mechanisch ausgesteift werden. Dies ist insbesondere bei vorhandenen Randaussparungen der Dichtlippe für das Dichtvermögen des Radialwellendichtrings von Vorteil. Darüber hinaus kann durch einen solchen Absatz dem Risiko einer unerwünschten Beschädigung der Dichtkante beim Herstellungsprozess des Radialwellendichtrings besonders wirkungsvoll entgegengewirkt werden.

Die Randaussparungen können jeweils eine bogenförmige, insbesondere kreislinienförmige, eine rechteckige, dreieckige oder eine Freiform-Kontur aufweisen. Durch die geometrische Ausgestaltung der Randaussparungen kann der Kontaktpressungsübergang zwischen den Bereichen mit und ohne Aussparungen beeinflusst werden. Durch die geometrische Gestaltung der Randaussparungen kann in vorteilhafter Weise das abzudichtende Fluid/Medium/Öl verwirbelt werden, sodass dessen Durchmischung verbessert wird bzw. Temperaturdifferenzen reduziert werden. Zu beachten ist dabei, dass eine rechteckige Geometrie der Randaussparungen bei einer sogenannten Fett-Abdichtung vorteilhaft sein kann, da so mehr Fett nahe dem Dichtkontakt an der Dichtlippe anhaften kann.

Die Dichtlippe des Radialwellendichtrings kann ein gummielastisch verformbares Material oder Polytetrafluorethylen (PTFE), ein PTFE-Compound oder ein anderes zähelastisch verformbares Material umfassen oder aus einem dieser Materialien bestehen.

Die erfindungsgemäße Radialwellendichtung umfasst einen vorstehend erläuterten Radialwellendichtring und ein (ringförmiges) Spannelement, das in der Haltenut der Dichtlippe des Radialwellendichtrings angeordnet ist. Das Spannelement kann bei einem innendichtend ausgeführten Radialwellendichtring bevorzugt in Form einer Zugfeder oder eines elastomeren Spannrings und im Falle eines außendichtend ausgeführten Radialwellendichtrings vorzugsweise in Form einer Druckfeder ausgebildet sein.

Grundsätzlich kann der erfindungsgemäße Wellendichtring auch als ein Axialwellendichtring ausgeführt sein, wobei das Spannelement beispielsweise als eine Sternfeder ausgebildet ist. Bei einem erfindungsgemäßen Wellendichtring in Ausführung eines Axialwellendichtrings sind dem Fachmann die zu beachtenden richtungsbedingten Anpassungen bekannt.

Ist der Radialwellendichtring mit den vorgenannten Vertiefungen versehen, so können diese nach der Erfindung eine derartige radiale Tiefe aufweisen, dass das Spannelement den Nutgrund der Haltenut, d. h. die Dichtlippe, über die Umfangserstreckung der Vertiefung nicht kontaktiert. In dazu korrespondierender Weise können sich die Randaussparungen in axialer Richtung weit in die Haltenut hinein und/oder darüber hinaus erstrecken, sodass es im Bereich der Randausnehmungen an einem Nutgrund fehlt.

Die erfindungsgemäße Radialwellendichtungsanordnung umfasst eine Welle und ein die Welle umgreifendes Maschinenteil, die unter Ausbildung eines Dichtspalts voneinander beabstandet und um eine Bewegungsachse relativ zueinander bewegbar angeordnet sind. Zur Abdichtung des Dichtspalts dient eine Radialwellendichtung, deren Radialwellendichtring mittels des Vorspannelements mit seiner Dichtkante an einer Dichtfläche des Maschinenteils oder der Welle vorgespannt dynamisch dichtend anliegt. Die Radialwellendichtungsanordnung ist insbesondere für Hochgeschwindigkeitsanwendungen oder andere thermisch kritische Anwendungen geeignet, bei denen möglichst lange Wartungsintervalle der Radialwellendichtung angestrebt werden.

Es versteht sich, dass der Radialwellendichtring mit weiteren Bauteilen, insbesondere Stützelementen, Haltelementen, Dichtungen, in einer montagefertigen Kartusche bereitgestellt werden kann. Die Kartusche kann aus einem gummielastisch oder einem zähelastisch verformbaren Material bestehen.

Der Radialwellendichtring kann auch mit weiteren Dichtungen, insbesondere einem weiteren Radialwellendichtring, etwa in der sogenannten back-to-back Anordnung, eingesetzt werden. Es versteht sich darüber hinaus, dass der Radialwellendichtring eine Staublippe und weitere funktionelle Anbauteile oder integrierte Bauteile aufweisen kann.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

In der Zeichnung zeigen:
- Fig. 1: eine Radialwellendichtungsanordnung mit einer Welle, einem die Welle unter Ausbildung eines Dichtspalts umgreifenden Maschinenteil und einer Radialwellendichtung zum Abdichten des Dichtspalts;
- Fig. 2: die Radialwellendichtung gemäß Fig. 1 in einer freigestellten Ansicht, umfassend einen Radialwellendichtring mit einem Vorspannelement und Randaussparungen, durch die ein in Umfangsrichtung des Radialwellendichtrings hochvariabler Kontaktpressungsverlauf zwischen Dichtkante und Gegenlauf- bzw. Dichtfläche bewirkt ist;
- Fig. 3: die Radialwellendichtung gemäß Fig. 2 in einer ausschnittsweisen rückseitigen Draufsicht;
- Fig. 4: den Radialwellendichtring gemäß Fig. 2 in einem freigestellten rückseitigen Detailausschnitt;
- Fig. 5: die Radialwellendichtung gemäß Fig. 2 in einem dichtkantenseitigen Detailausschnitt;
- Fig. 6: ein weiteres Ausführungsbeispiel des Radialwellendichtrings, bei dem die Randaussparungen einen großen Abstand zur Dichtkante aufweisen, in einem perspektivischen Detailausschnitt;
- Fig. 7: eine Radialwellendichtung, bei der sich die Randaussparungen der Dichtlippe des Radialwellendichtrings nahezu bis zur Dichtkante der Dichtlippe erstrecken und sich die Randaussparungen in axialer Richtung weit in die Haltenut hineinerstrecken, sodass es im Bereich der Randausnehmungen an einem Nutgrund fehlt, in einem dichtkantenseitigen Detailausschnitt;
- Fig. 8: die Radialwellendichtung gemäß Fig. 7, in einer Ansicht analog zu Fig. 2;
- Fig. 9: eine Radialwellendichtung, bei der der Radialwellendichtring rechteckig ausgeführte Randaussparungen aufweist, in einer perspektivischen Detailansicht;
- Fig. 10: einen Radialwellendichtring mit dreieckig ausgeführten Randaussparungen, in einem Detailausschnitt; und
- Fig. 11: eine Radialwellendichtung, bei der der Radialwellendichtring eine Dichtlippe mit undulierend ausgeführten Randaussparungen und undulierter Dichtkante aufweist, in einem Detailausschnitt.

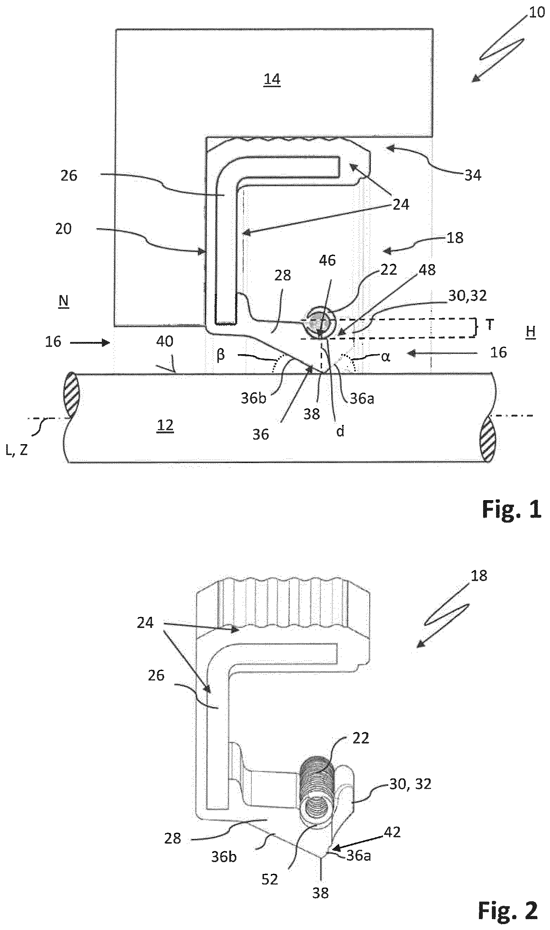

In **Fig. 1** ist eine Radialwellendichtungsanordnung **10** mit einer Welle **12** und mit einem die Welle 12 umgreifenden Maschinenteil **14** gezeigt, die unter Ausbildung eines Dichtspalts **16** voneinander beabstandet und um eine Bewegungsachse **L** relativ zueinander bewegbar angeordnet sind. Zum Abdichten einer Öl- bzw. Hochdruckseite **H** (= abzudichtende Seite) gegenüber einer Außen- bzw. Niederdruckseite **N** des Dichtspalts 16 dient eine Radialwellendichtung **18.**

Die Radialwellendichtung 18 umfasst einen Radialwellendichtring **20** und ein ringförmiges und gummielastisch verformbares Vorspannelement **22.** Der Radialwellendichtring 20 ist in den **Fign. 2** bis **5** in weiteren Detaildarstellungen gezeigt. Der Radialwellendichtring 20 umfasst einen Halteabschnitt **24,** der hier beispielhaft einen L-förmigen Querschnitt aufweist. Der Halteabschnitt ist in an sich bekannter Weise mit einem Aussteifungselement **26** versehen. Der Radialwellendichtring umfasst eine Dichtlippe **28,** die sich vom Halteabschnitt 24 in einer zur Zentralachse **Z** des Radialwellendichtrings 20 axialen Richtung vom Halteabschnitt 24 wegerstreckt. Ein freier Rand **30** der Dichtlippe 28 ist hier durch eine Stirnseite **32** gebildet. Der Halteabschnitt 24 ist in einer in axialer Richtung einseitig offenen Montagenut **34** des Maschinenteils 14 angeordnet. Es versteht sich, dass die Radialwellendichtung 18 auch in einer Montagekartusche (nicht gezeigt) oder einer anderen hülsenförmigen Halteeinrichtung angeordnet sein kann, wie diese dem Fachmann geläufig sind. Insoweit kann beispielsweise das Maschinenteil 14 selbst als Montagekartusche ausgeführt sein.

Die Dichtlippe 28 weist eine Dichtseite **36** mit einer Dichtkante **38** auf, die mittels des Vorspannelements 22 an der Dichtfläche **40** der Welle 12 in einer radialen Richtung vorgespannt dynamisch dichtend anliegt.

Die Dichtseite 36 weist ein öl- bzw. hochdruckseitig angeordnetes erstes Oberflächensegment **36a** und einen niederdruckseitig angeordnetes zweites Oberflächensegment **36b** auf, die im Einbauzustand des Radialwellendichtrings 20 zur Dichtfläche 40 jeweils unter einem (Kontaktflächen-)Winkel **α, β** schräg verlaufend angeordnet sind. Der zur Hochdruckseite H offene Winkel α ist in an sich bekannter Weise größer als der zur Niederdruckseite N offene Winkel β.

Die Dichtlippe 28 kann an ihrer Dichtseite 36 hochdruckseitig der Dichtkante 38 einen Absatz **42** ausbilden, der bei der Fertigung des Radialwellendichtrings einen Schutz der Dichtkante 38 gegenüber unerwünschten Beschädigungen ermöglicht.

Die Dichtlippe 28 weist an ihrer von der Dichtkante 38 wegweisenden Rückseite **44** eine ringförmig umlaufende Haltenut **46** auf. Das Vorspannelement 22 ist in dieser Haltenut 46 angeordnet.

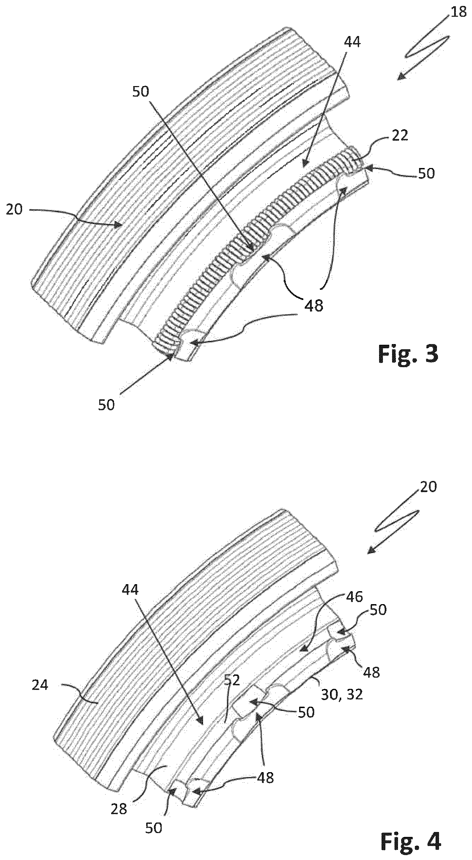

Die Dichtlippe 28 ist mit mehreren Randaussparungen **48** versehen, die hier in Umfangsrichtung des Radialwellendichtrings 20 voneinander beabstandet angeordnet sind. Zwischen jeder Randaussparung 48 ist ein freies Randsegment der Dichtlippe 28 angeordnet. Die Randaussparungen 48 erstrecken sich in einer axialen Richtung von der Umfangskontur des freien Rands 30, also der Stirnseite 32, der Dichtlippe 28 bis zur Haltenut 46 und durchbrechen die gesamte Dichtlippe 28 in einer radialen Richtung. Die Haltenut 46 ist mithin in axialer Richtung zur Hochdruckseite H hin abschnittsweise durchbrochen, wie dies in den Fign. 3 bis 5 gezeigt ist. Jede Randaussparung 48 ist von der Dichtkante 38 beabstandet, um das Dichtvermögen des Radialwellendichtrings 20 nicht zu kompromittieren.

Gemäß Fig. 4 weist der Radialwellendichtring 20 zusätzlich zu den Randaussparungen 48 Vertiefungen **50** der Haltenut 46 auf. Die Vertiefungen 50 sind in Umfangsrichtung des Radialwellendichtrings 20 voneinander regelmäßig beabstandet angeordnet. Jede Vertiefung 50 kann beispielsweise eine radiale Tiefe t aufweisen, die 10 bis 40%, insbesondere 10% bis 20% der Nenndicke **d** der Dichtlippe 28, gemessen zwischen Dichtkante 38 und Nutgrund **52** der Haltenut 46, beträgt.

Die Randaussparungen 48 sind hier jeweils zu einer der Vertiefungen 50 in axialer Richtung fluchtend angeordnet. Dadurch kann die Kontaktflächenpressung zwischen der Dichtkante 38 und der Dichtfläche 40 in Umfangsrichtung besonders wirksam variiert werden. Zu beachten ist, dass die Randaussparungen 48 und die Vertiefungen 50 der Haltenut 46 auch in Umfangsrichtung zueinander versetzt angeordnet, insbesondere in axialer Richtung relativ zueinander auf Lücke angeordnet sein können. Dadurch kann die Kontaktflächenpressung zwischen Dichtkante 38 und Dichtfläche 40 lokal fein abgestuft angepasst werden. Auch können einige der Vertiefungen mit einigen Aussparungen axial fluchtend angeordnet sein und zwischen diesen fluchtenden Vertiefung-Aussparung-Anordnungen zusätzliche Vertiefungen angeordnet sein, so dass die fluchtenden Vertiefung-Aussparung-Anordnungen und die zusätzlichen Vertiefungen in Umfangsrichtung relativ zueinander versetzt angeordnet, insbesondere in axialer Richtung auf Lücke angeordnet sind.

Im Einbauzustand des Radialwellendichtrings 20 ist bei einer vorhandenen sogenannten Überdeckung zwischen Dichtlippe 28 und Dichtfläche 40, d. h. einer durch den Einbau des Radialwellendichtrings 20 bedingten elastischen Verformung der Dichtlippe 28 in einer radialen Richtung, bereits durch die Randaussparungen 48 auf der Ölseite H der Dichtlippe 28 ein über den Umfang vorteilhafter Kontaktpressungsverlauf zwischen Dichtkante 38 und Dichtfläche 40 (Fig. 1) gewährleistet. In diesem Fall ist eine zusätzliche Federnutmodifikation durch die nutgrundseitigen Vertiefungen 50 nicht zwingend notwendig. Diese können gleichwohl genutzt werden, um den Kontaktpressungsverlauf weiter zu modifizieren.

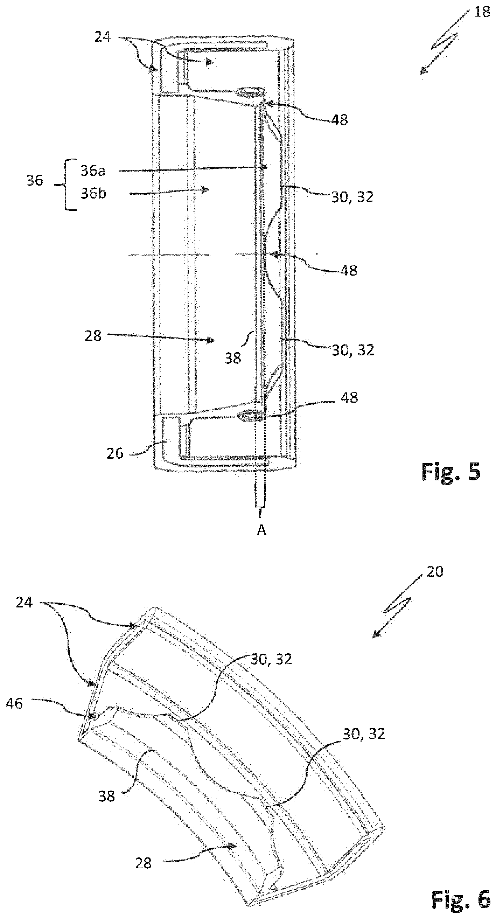

Gemäß der in **Fig. 5** gezeigten Draufsicht auf die Dichtkante 38 des Radialwellendichtrings 20 können die einzelnen Randaussparungen 48 der Dichtlippe 28 insbesondere kreislinienförmig ausgeführt sein.

Der in **Fig. 6** gezeigte Radialwellendichtring 20 unterscheidet sich von dem in den Fign. 2 bis 5 gezeigten Radialwellendichtring 20 im Wesentlichen darin, dass die Randaussparungen 48 (bei gleichem Durchmesser des Radialwellendichtrings 20) jeweils eine vergleichsweise größere Umfangserstreckung aufweisen und von der Dichtkante 38 weiter beabstandet sind. Diese Bauart des Radialwellendichtrings 20 bietet fertigungstechnische Vorteile, zumal dadurch eine unerwünschte Beschädigung der Dichtkante 38 während des Fertigungsprozesses nochmals sicherer vermieden werden kann.

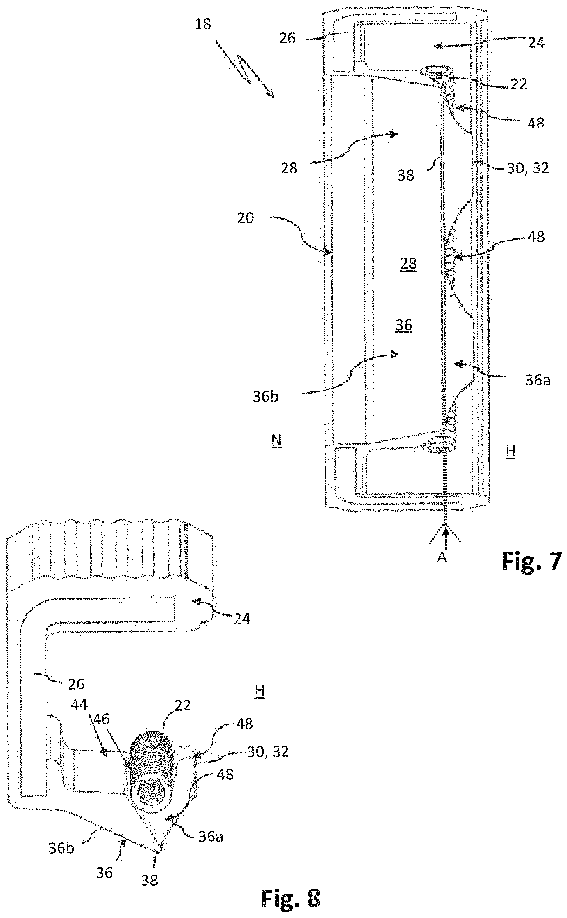

Gemäß dem in den **Fig. 7** und **8** gezeigten Radialwellendichtring 20 können die Randaussparungen 48 den Nutgrund 52 der Haltenut in axialer Richtung vollständig durchbrechen und dichtseitig ggf. nahezu bis zur Dichtkante 38 reichen. In diesem Fall ist das Vorspannelement 22, hier die Zugfeder, in einer radialen Richtung zumindest abschnittsweise nicht durch die Dichtlippe 28 in radialer Richtung überdeckt. Wie in Fig. 8 gezeigt ist, liegt das Vorspannelement 22 über die Umfangserstreckung der jeweiligen Randaussparung 48 nicht an der Dichtlippe 28 an. Das Vorspannelement 28 hat in diesem Bereich keinen Kontakt mehr zum Nutgrund (und "hängt" in diesen Bereichen sozusagen "in der Luft").

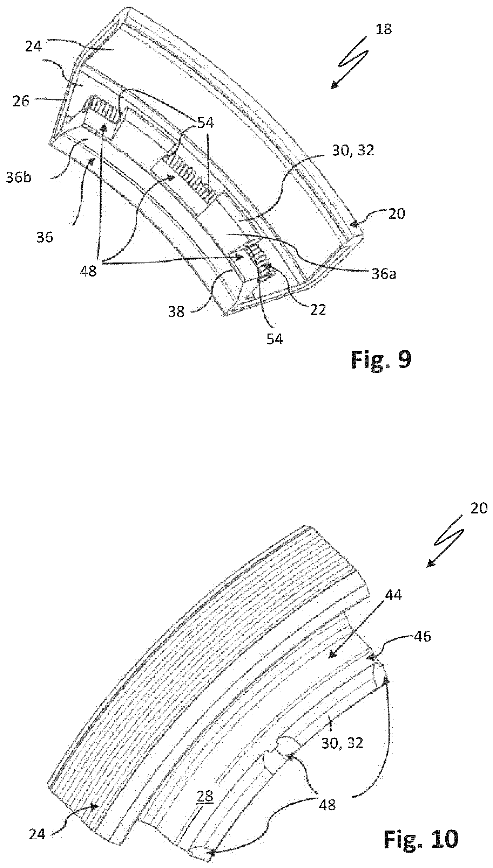

Die Randaussparungen 48 der Dichtlippe 28 des Radialwellendichtrings 20 können gemäß dem in **Fig. 9** gezeigten Ausführungsbeispiel jeweils rechteckig ausgeführt sein. Dadurch kann in den zu den umfangsseitigen Seitenwände **54** der Randaussparungen 48 korrespondierenden Dichtkantenzonen ein besonders steiler Gradient des Kontaktpressungsverlaufs zwischen Dichtkante 38 und Dichtfläche 40 (Fig. 1) erreicht werden. Durch Randaussparungen 48 mit einer dreieckigen Geometrie, wie sie in **Fig. 10** gezeigt sind, können aufgrund der konvergierenden Seitenwände 54 der Randaussparungen 48 drehrichtungsunabhängig eine nochmals weiter verbesserte Schmierung und Kühlung der Dichtkante 38 erreicht werden.

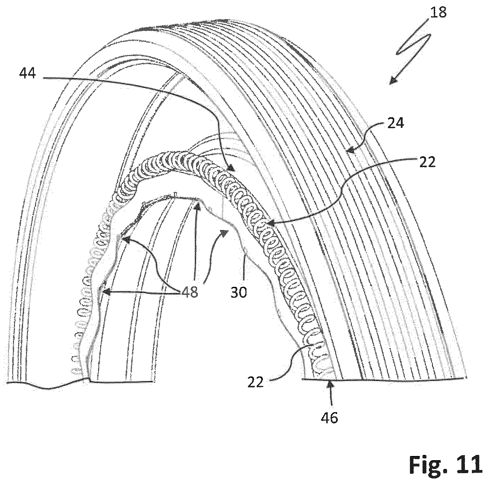

Die Randaussparungen 48 können gemäß dem in **Fig. 11** gezeigten Radialwellendichtring 20 auch in Umfangsrichtung des Radialwellendichtrings 20 unmittelbar hintereinanderliegend aufgereiht angeordnet sein. In diesem Fall kann sich ein undulierender freier Rand 30 der Dichtlippe 28 ergeben. In dazu entsprechender Weise kann auch die Dichtkante 38 in Umfangsrichtung undulierend ausgeführt sein. Dadurch kann die Schmierung der Dichtkante 38 im Betriebseinsatz weiter begünstigt werden.

Die Dichtlippe 28 der vorstehend im Zusammenhang mit den Figuren 1 bis 11 dargestellten Radialwellendichtringe 20 können jeweils ein gummielastisch verformbares Material oder Polytetrafluorethylen (PTFE), ein PTFE-Compound oder ein anderes zähelastisch verformbares Material umfassen oder aus einem dieser Materialien bestehen. Gleichermaßen können die Radialwellendichtringe 20 auch außendichtend ausgeführt sein. In diesem Fall ist das Vorspannelement 22 vorzugsweise als eine außenspannende Druckfeder oder dergleichen ausgebildet.

Zusammenfassend betrifft die Erfindung einen Radialwellendichtring 20 umfassend einen Halteabschnitt 24 und eine Dichtlippe 28, die sich vom Halteabschnitt 24 in einer zur Zentralachse Z des Radialwellendichtrings 20 axialen Richtung bis zu ihrem freien Rand 30 wegerstreckt. Die Dichtlippe 28 umfasst eine Dichtseite, die eine Dichtkante zur dynamisch dichtenden Anlage an der Dichtfläche der Welle oder des Maschinenteils aufweist, sowie eine von der Dichtkante in radialer Richtung wegweisende Rückseite, die mit einer Haltenut zur Aufnahme eines elastisch verformbaren Vorspannelements versehen ist, mittels dessen die Dichtkante im Betriebseinsatz des Radialwellendichtrings in einer radialen Richtung gegen eine jeweilige Dichtfläche 40 dynamisch dichtend vorspannbar ist. Die Dichtlippe hat am Nutgrund der Haltenut radiale Vertiefungen, die in Umfangsrichtung des Radialwellendichtrings voneinander beabstandet angeordnet sind, und/oder mehrere Randaussparungen, die sich jeweils in einer radialen Richtung von der Haltenut bis zur Dichtseite erstrecken. Jede Randaussparung 48 ist von der Dichtkante 38 beabstandet und kann den Nutgrund 52 der Haltenut 46, ggf. vollständig, durchbrechen.

## Patentansprüche

1. Radialwellendichtring (20) zum Abdichten eines Dichtspalts (16) zwischen einer Welle (12) und einem die Welle (12) umgreifenden Maschinenteil (14), umfassend einen Halteabschnitt (24) und eine Dichtlippe (28), die sich vom Halteabschnitt (24) in einer zur Zentralachse (Z) des Radialwellendichtrings (20) axialen Richtung bis zu ihrem freien Rand (30) wegerstreckt, wobei die Dichtlippe (28) umfasst:
• eine Dichtseite (36), die eine Dichtkante (38) zur dynamisch dichtenden Anlage an der Dichtfläche (40) der Welle (12) oder des Maschinenteils (14) aufweist; und
• eine von der Dichtkante (38) in radialer Richtung wegweisende Rückseite (44), die eine radial nach außen offene Haltenut (46) zur Aufnahme eines elastisch verformbaren Vorspannelements (22) aufweist, mittels dessen die Dichtkante (38) im Betriebseinsatz des Radialwellendichtrings (20) in einer radialen Richtung gegen die Dichtfläche (40) der Welle (12) vorspannbar ist,
**dadurch gekennzeichnet,**
(a) **dass** der Nutgrund (52) der Haltenut (46) radiale Vertiefungen (50) aufweist, die in Umfangsrichtung des Radialwellendichtrings (20) voneinander beabstandet angeordnet sind, wobei jede Vertiefung (50) eine radiale Tiefe (t) aufweist, die 10 bis 40% der Nenndicke (d) der Dichtlippe (28), gemessen zwischen Dichtkante (38) und Nutgrund (52) der Haltenut (46), beträgt,
und/oder
(b) **dass** die Dichtlippe (28) mehrere Randaussparungen (48) aufweist, wobei die mehreren Randaussparungen (48) in Umfangsrichtung des Radialwellendichtrings (20) voneinander beabstandet angeordnet sind, wobei jede Randaussparung (48) die Dichtkante (38) kontaktiert oder von der Dichtkante (38) beabstandet ist und sich in einer radialen Richtung von der Dichtseite (36) bis zur Haltenut (46) erstreckt.

2. Radialwellendichtring (20) gemäß Anspruch 1, **dadurch gekennzeichnet, dass** die Randaussparungen (48) den Nutgrund (52) der Haltenut (46) durchbrechen.

3. Radialwellendichtring (20) gemäß Anspruch 1 oder 2, **dadurch gekennzeichnet, dass** in der Variante (b) die Dichtlippe (28) am Nutgrund (52) ihrer Haltenut (46) radiale Vertiefungen (50) aufweist, die in Umfangsrichtung des Radialwellendichtrings (20) voneinander beabstandet angeordnet sind

4. Radialwellendichtring (20) gemäß einem der vorhergehenden Ansprüche, **dadurch gekennzeichnet, dass** mindestens eine Randaussparung (48) zu einer Vertiefung (50) in axialer Richtung fluchtend angeordnet ist, insbesondere einige oder alle Randaussparungen (48) zu Vertiefungen (50) in axialer Richtung fluchtend angeordnet sind.

5. Radialwellendichtring (20) gemäß einem der vorhergehenden Ansprüche, **dadurch gekennzeichnet, dass** mindestens eine Randaussparung (48) zu einer Vertiefung (50) in Umfangsrichtung versetzt angeordnet ist, insbesondere einige Randaussparungen (48) und einige Vertiefungen (50) oder alle Randaussparungen (48) und alle Vertiefungen (50) in Umfangsrichtung relativ zueinander versetzt angeordnet sind.

6. Radialwellendichtring (20) gemäß einem der vorhergehenden Ansprüche, **dadurch gekennzeichnet, dass** zumindest einige Randaussparungen (48) und einige Vertiefungen (50), insbesondere alle Randaussparungen (48) und alle Vertiefungen (50), in axialer Richtung relativ zueinander auf Lücke angeordnet sind.

7. Radialwellendichtring (20) gemäß einem der vorhergehenden Ansprüche, **dadurch gekennzeichnet, dass** die Dichtlippe (28) an ihrer Dichtseite (36) hochdruckseitig der Dichtkante (38) einen Absatz (42) ausbildet.

8. Radialwellendichtring (20) gemäß einem der vorhergehenden Ansprüche, **dadurch gekennzeichnet, dass** die Randaussparungen (48) eine größere Umfangserstreckung aufweisen als die zwischen den Randaussparungen angeordneten freien Ränder der Dichtlippe.

9. Radialwellendichtring (20) gemäß einem der vorhergehenden Ansprüche, **dadurch gekennzeichnet, dass** die Randaussparungen (48) eine bogenförmige, insbesondere kreislinienförmige, eine rechteckige, eine dreieckige Kontur oder eine Freiformkontur aufweisen.

10. Radialwellendichtring (20) gemäß einem der vorhergehenden Ansprüche, **dadurch gekennzeichnet, dass** die Dichtlippe (28) ein gummielastisch verformbares Material oder Polytetrafluorethylen (PTFE), einem PTFE-Compound oder ein anderes zähelastisch verformbares Material umfasst oder aus einem dieser Materialien besteht.

11. Radialwellendichtung (18) umfassend einen Radialwellendichtring (20) gemäß einem der vorhergehenden Ansprüche und ein Vorspannelement (22), bevorzugt in Form einer Zug- oder Druckfeder, das in der Haltenut (46) der Dichtlippe (28) des Radialwellendichtrings (20) gehalten angeordnet ist.

12. Radialwellendichtung (18) gemäß Anspruch 11, **dadurch gekennzeichnet, dass** die Vertiefungen (50) eine derartige radiale Tiefe (T) aufweisen, dass das Vorspannelement (22) den Nutgrund (52) im Bereich der Vertiefung (50) nicht kontaktiert.

13. Radialwellendichtungsanordnung (10) umfassend
- eine Welle (12) und ein die Welle (12) umgreifendes Maschinenteil (14), die unter Ausbildung eines Dichtspalts (16) voneinander beabstandet und um eine Bewegungsachse (L) relativ zueinander bewegbar angeordnet sind; und
- eine Radialwellendichtung (18) gemäß Anspruch 11 oder 12, wobei der Radialwellendichtring (20) mittels des Vorspannelements (22) an einer Dichtfläche (40) der Welle (12) oder des Maschinenteils (14) vorgespannt dynamisch dichtend anliegt.

14. Radialwellendichtungsanordnung (10) gemäß Anspruch 13, **dadurch gekennzeichnet, dass** die Dichtlippe (28) des Radialwellendichtrings (20) im Bereich der Randaussparungen (48) und das Vorspannelement (22) in einer streng radialen Richtung ohne gegenseitige Überdeckung sind.

## Claims

1. A radial shaft sealing ring (20) for sealing a sealing gap (16) between a shaft (12) and a machine part (14) surrounding the shaft (12), comprising a retaining portion (24) and a sealing lip (28) which extends away from the retaining portion (24) in a direction axial to the central axis (Z) of the radial shaft sealing ring (20) as far as its free edge (30), wherein the sealing lip (28) comprises:
- a sealing side (36) comprising a sealing edge (38) for bearing in a dynamically sealing manner against the sealing surface (40) of the shaft (12) or of the machine part (14); and
- a rear side (44) pointing away from the sealing edge (38) in the radial direction, which has a radially outwards open retaining groove (46) for receiving an elastically deformable preloading element (22), by means of which the sealing edge (38), in operational use of the radial shaft sealing ring (20), can be preloaded in a radial direction against the sealing surface (40) of the shaft (12),
**characterized in that**
(a) the groove bottom (52) of the retaining groove (46) has radial depressions (50) which are spaced apart from one another in the circumferential direction of the radial shaft sealing ring (20), wherein each depression (50) has a radial depth (t) which is 10 to 40% of the nominal thickness (d) of the sealing lip (28), measured between sealing edge (38) and groove bottom (52), of the retaining groove (46),
and/or
(b) the sealing lip (28) has a plurality of edge cutouts (48), wherein the plurality of edge cutouts (48) are spaced apart from one another in the circumferential direction of the radial shaft sealing ring (20), wherein each edge cutout (48) makes contact with the sealing edge (38) or is spaced apart from the sealing edge (38) and extends in a radial direction from the sealing side (36) as far as the retaining groove (46).

2. The radial shaft sealing ring (20) as claimed in claim 1, **characterized in that** the edge cutouts (48) break through the groove bottom (52) of the retaining groove (46).

3. The radial shaft sealing ring (20) as claimed in claim 1 or 2, **characterized in that** in the variant (b), the sealing lip (28) has radial depressions (50) on the groove bottom (52) of its retaining groove (46), which are spaced apart from one another in the circumferential direction of the radial shaft sealing ring (20).

4. The radial shaft sealing ring (20) as claimed in one of the preceding claims, **characterized in that** at least one edge cutout (48) is arranged aligned in the axial direction with respect to a depression (50), in particular some or all edge cutouts (48) are arranged aligned in the axial direction with respect to depressions (50).

5. The radial shaft sealing ring (20) as claimed in one of the preceding claims, **characterized in that** at least one edge cutout (48) is arranged offset in the circumferential direction with respect to a depression (50), in particular some edge cutouts (48) and some depressions (50) or all edge cutouts (48) and all depressions (50) are arranged offset in the circumferential direction with respect to each other.

6. The radial shaft sealing ring (20) as claimed in one of the preceding claims, **characterized in that** at least some edge cutouts (48) and some depressions (50), in particular all edge cutouts (48) and all depressions (50), are arranged staggered in the axial direction relative to each other.

7. The radial shaft sealing ring (20) as claimed in one of the preceding claims, **characterized in that** the sealing lip (28) forms a shoulder (42) on its sealing side (36) on the high-pressure side of the sealing edge (38).

8. The radial shaft sealing ring (20) as claimed in one of the preceding claims, **characterized in that** the edge cutouts (48) have a larger circumferential extent than the free edges of the sealing lip arranged between the edge cutouts.

9. The radial shaft sealing ring (20) as claimed in one of the preceding claims, **characterized in that** the edge cutouts (48) have an arcuate, in particular circular line-shaped contour, a rectangular, a triangular contour or a free-form contour.

10. The radial shaft sealing ring (20) as claimed in one of the preceding claims, **characterized in that** the sealing lip (28) comprises a rubber-elastomerically deformable material or polytetrafluoroethylene (PTFE), a **PTFE** compound or another viscoelastically deformable material or consists of one of these materials.

11. A radial shaft seal (18) comprising a radial shaft sealing ring (20) as claimed in one of the preceding claims and a preloading element (22), preferably in the form of a tension or compression spring, which is arranged held in the retaining groove (46) of the sealing lip (28) of the radial shaft sealing ring (20).

12. The radial shaft seal (18) as claimed in claim 11, **characterized in that** the depressions (50) have such a radial depth (T) that the preloading element (22) does not make contact with the groove bottom (52) in the region of the depression (50).

13. A radial shaft seal arrangement (10) comprising
- a shaft (12) and a machine part (14) surrounding the shaft (12), which are spaced apart from one another forming a sealing gap (16) and arranged movably relative to each other about a movement axis (L), and
- a radial shaft seal (18) as claimed in claim 11 or 12, wherein the radial shaft sealing ring (20) bears in a dynamically sealing manner preloaded by means of the preloading element (22) against a sealing surface (40) of the shaft (12) or the machine part (14).

14. The radial shaft seal arrangement (10) as claimed in claim 13, **characterized in that** the sealing lip (28) of the radial shaft sealing ring (20) in the region of the edge cutouts (48) and the preloading element (22) are in a strictly radial direction without mutual overlap.

## Revendications

1. Bague radiale d'étanchéité d'arbre (20) permettant de rendre étanche un espace d'étanchéité (16) entre un arbre (12) et une pièce de machine (14) entourant l'arbre (12), comprenant une section de retenue (24) et une lèvre d'étanchéité (28) qui s'étend depuis la section de retenue (24) jusqu'à son bord libre (30) dans une direction axiale par rapport à l'axe central (Z) de la bague radiale d'étanchéité d'arbre (20), la lèvre d'étanchéité (28) comprenant :
• un côté d'étanchéité (36) qui présente une arête d'étanchéité (38) permettant une mise en place, de manière à présenter une étanchéité dynamique, au niveau de la surface d'étanchéité (40) de l'arbre (12) ou de la pièce de machine (14) ; et
• un côté arrière (44) se détournant de l'arête d'étanchéité (38) dans la direction radiale et qui présente une rainure de retenue (46) ouverte radialement vers l'extérieur permettant d'accueillir un élément de précontrainte (22) élastiquement déformable au moyen duquel l'arête d'étanchéité (38) peut être précontrainte dans une direction radiale contre la surface d'étanchéité (40) de l'arbre (12) lors de l'utilisation de la bague radiale d'étanchéité d'arbre (20),
**caractérisée en ce que**
(a) le fond de rainure (52) de la rainure de retenue (46) présente des cavités radiales (50) qui sont agencées de manière espacée les unes des autres dans la direction circonférentielle de la bague radiale d'étanchéité d'arbre (20), chaque cavité (50) présentant une profondeur radiale (t) qui représente entre 10 et 40 % de l'épaisseur nominale (d) de la lèvre d'étanchéité (28) mesurée entre l'arête d'étanchéité (38) et le fond de rainure (52) de la rainure de retenue (46),
et/ou
(b) la lèvre d'étanchéité (28) présente plusieurs évidements de bord (48), les plusieurs évidements de bord (48) étant agencés de manière espacée les uns des autres dans la direction circonférentielle de la bague radiale d'étanchéité d'arbre (20), chaque évidement de bord (48) étant en contact avec l'arête d'étanchéité (38) ou étant espacé de l'arête d'étanchéité (38) et s'étendant dans une direction radiale depuis le côté d'étanchéité (36) jusqu'à la rainure de retenue (46).

2. Bague radiale d'étanchéité d'arbre (20) selon la revendication 1, **caractérisée en ce que** les évidements de bord (48) traversent le fond de rainure (52) de la rainure de retenue (46).

3. Bague radiale d'étanchéité d'arbre (20) selon la revendication 1 ou 2, **caractérisée en ce que** dans la variante (b), la lèvre d'étanchéité (28) présente, au niveau du fond de rainure (52) de sa rainure de retenue (46), des cavités radiales (50) qui sont agencées de manière espacée les unes des autres dans la direction circonférentielle de la bague radiale d'étanchéité d'arbre (20).

4. Bague radiale d'étanchéité d'arbre (20) selon l'une quelconque des revendications précédentes, **caractérisée en ce qu'**au moins un évidement de bord (48) est agencé de manière alignée dans la direction axiale par rapport à une cavité (50), en particulier certains ou tous les évidements de bord (48) sont agencés de manière alignée dans la direction axiale par rapport aux cavités (50).

5. Bague radiale d'étanchéité d'arbre (20) selon l'une quelconque des revendications précédentes, **caractérisée en ce qu'**au moins un évidement de bord (48) est agencé de manière décalée dans la direction circonférentielle par rapport à une cavité (50), en particulier certains évidements de bord (48) et certaines cavité (50) ou tous les évidements de bord (48) et toutes les cavités (50) sont agencés de manière décalée les uns par rapport aux autres dans la direction circonférentielle.

6. Bague radiale d'étanchéité d'arbre (20) selon l'une quelconque des revendications précédentes, **caractérisée en ce qu'**au moins certains évidements de bord (48) et certaines cavités (50), en particulier tous les évidements de bord (48) et toutes les cavités (50), sont agencés sur des vides les uns par rapport aux autres dans la direction axiale.

7. Bague radiale d'étanchéité d'arbre (20) selon l'une quelconque des revendications précédentes, **caractérisée en ce que** la lèvre d'étanchéité (28) forme un épaulement (42) au niveau de son côté d'étanchéité (36) du côté haute pression de l'arête d'étanchéité (38).

8. Bague radiale d'étanchéité d'arbre (20) selon l'une quelconque des revendications précédentes, **caractérisée en ce que** les évidements de bord (48) présentent une extension circonférentielle plus grande que les bords libres de la lèvre d'étanchéité agencés entre les évidements de bord.

9. Bague radiale d'étanchéité d'arbre (20) selon l'une quelconque des revendications précédentes, **caractérisée en ce que** les évidements de bord (48) présentent un contour arqué, en particulier circulaire, un contour rectangulaire, un contour triangulaire ou un contour de forme libre.

10. Bague radiale d'étanchéité d'arbre (20) selon l'une quelconque des revendications précédentes, **caractérisée en ce que** la lèvre d'étanchéité (28) comprend un matériau déformable à élasticité de caoutchouc ou du polytétrafluoroéthylène (PTFE), un composé de PTFE ou un autre matériau déformable à viscoélasticité ou est constituée de l'un des dits matériaux.

11. Joint radial d'étanchéité d'arbre (18) comprenant une bague radiale d'étanchéité d'arbre (20) selon l'une quelconque des revendications précédentes et un élément de précontrainte (22), de manière préférée sous la forme d'un ressort de traction ou de compression qui est retenu dans la rainure de retenue (46) de la lèvre d'étanchéité (28) de la bague radiale d'étanchéité d'arbre (20).

12. Joint radial d'étanchéité d'arbre (18) selon la revendication 11, **caractérisé en ce que** les cavités (50) présentent une profondeur radiale (T) telle que l'élément de précontrainte (22) n'est pas en contact avec le fond de rainure (52) dans la région de la cavité (50).

13. Dispositif radial d'étanchéité d'arbre (10), comprenant
- un arbre (12) et une pièce de machine (14) entourant l'arbre (12), qui sont agencés de manière espacée l'un de l'autre avec formation d'un espace d'étanchéité (16) et qui peuvent être déplacés l'un par rapport à l'autre autour d'un axe de mouvement (L) ; et
- un joint radial d'étanchéité d'arbre (18) selon la revendication 11 ou 12, la bague radiale d'étanchéité d'arbre (20) reposant de manière précontrainte et de manière à présenter une étanchéité dynamique au niveau d'une surface d'étanchéité (40) de l'arbre (12) ou de la pièce de machine (14) au moyen de l'élément de précontrainte (22).

14. Dispositif radial d'étanchéité d'arbre (10) selon la revendication 13, **caractérisé en ce que** la lèvre d'étanchéité (28) de la bague radiale d'étanchéité d'arbre (20) dans la région des évidements de bord (48) et l'élément de précontrainte (22) ne présentent pas de chevauchement mutuel dans une direction strictement radiale.
